# EUROPEAN PATENT SPECIFICATION

(11) **EP 3 686 452 B1**
(45) Date of publication and mention of the grant of the patent: **30.08.2023**
(21) Application number: 18859683.7
(22) Date of filing: 20.09.2018
(51) Int. Cl.: F16D 41/08, F16D 11/10, F16D 65/16, F16D 67/02, F16D 127/04, F16D 127/06, F16D 129/04, B60N 2/16

(54) **CLUTCH UNIT**
KUPPLUNGSEINHEIT
UNITÉ D'EMBRAYAGE

(30) Priority: 20.09.2017 JP 2017180175
(43) Date of publication of application: 29.07.2020
(73) Proprietor: NTN Corporation, Osaka-shi, Osaka 550-0003 (JP)
(72) Inventor: WATANABE, Kengo, Iwata-shi Shizuoka 438-8510 (JP)
(74) Representative: Eder Schieschke & Partner mbB
(86) International application number: PCT/JP2018/034842
(87) International publication number: WO 2019/059286

(56) References cited:
- CN-A- 105 864 315
- JP-A- 2001 140 948
- JP-A- 2001 140 949
- JP-A- 2005 054 829
- JP-A- 2012 041 943
- JP-A- 2013 245 755
- JP-A- 2017 509 844
- JP-Y1- S3 732 947
- US-A- 4 597 479
- US-A1- 2018 149 210

## Description

### TECHNICAL FIELD

The present invention relates to a clutch unit including an input-side clutch part to which a rotational torque is input, and an output-side clutch part that transmits the rotational torque from the input-side clutch part to an output side and blocks the rotational torque from the output side.

### BACKGROUND ART

In a clutch unit using engagement elements such as cylindrical rollers or balls, a clutch part is provided between an input member and an output member. The clutch part is configured to control transmission and blocking of the rotational torque by engaging and disengaging the above-described engagement elements between the input member and the output member.

The present applicant has previously proposed a clutch unit incorporated in an automobile seat lifter unit that adjusts a seat up and down by lever operation (for example, see Patent Literature 1).

The clutch unit disclosed in Patent Literature 1 includes a lever-side clutch part to which a rotational torque is input by lever operation, and a brake-side clutch part that transmits the rotational torque from the lever-side clutch part to the output side and blocks the rotational torque from the output side.

The lever-side clutch part has its main part constituted of an outer ring to which the rotational torque is input by lever operation, an inner ring that transmits the rotational torque input from the outer ring to the brake-side clutch part, and cylindrical rollers that control transmission and blocking of the rotational torque from the outer ring by engagement with and disengagement from a wedge gap between the outer ring and the inner ring.

The brake-side clutch part has its main part constituted of an inner ring to which the rotational torque from the lever-side clutch part is input, an output shaft to which the rotational torque from the inner ring is output, an outer ring whose rotation is restricted, and cylindrical rollers that control blocking of the rotational torque from the output shaft and transmission of the rotational torque from the lever-side clutch part by engagement with and disengagement from a wedge gap between the output shaft and the outer ring.

In the lever-side clutch part, when the rotational torque is input to the outer ring by lever operation, the cylindrical rollers are engaged with the wedge gap between the outer ring and the inner ring. By this engagement of the cylindrical rollers with the wedge gap, the rotational torque is transmitted to the inner ring, and the inner ring rotates.

In the brake-side clutch part, when the rotational torque is reversely input to the output shaft due to seating on the seat, the cylindrical rollers are engaged with the wedge gap between the output shaft and the outer ring, and the output shaft is locked to the outer ring. By this locking of the output shaft, the rotational torque reversely input from the output shaft is blocked. Thereby, a seat surface height of the seat is maintained.

On the other hand, when the rotational torque is input from the inner ring of the lever-side clutch part to the brake-side clutch part, the inner ring presses the cylindrical rollers, and the cylindrical rollers are disengaged from the wedge gap between the output shaft and the outer ring. This disengagement of the cylindrical rollers from the wedge gap releases the locked state of the output shaft, and the output shaft becomes rotatable.

Then, as the inner ring further rotates, the rotational torque from the inner ring is transmitted to the output shaft, and the output shaft rotates. By this rotation of the output shaft, the seat surface height of the seat can be adjusted.

### CITATIONS LIST

### PATENT LITERATURE

Patent Literature 1: JP 5207779 B2

From US 4 597 479A, a wet clutch is known which keeps a clutch hub of an input shaft side engaged with a clutch case by spline fitting the clutch case onto an output shaft freely movably in the axial direction and by utilizing an elastic force of a clutch spring.

JP 2005 054829 A discloses a power transmission device, wherein a frictional engagement part is erected between an input shaft and the output shaft 2. A cam mechanism, which imparts axial thrust force to a pressure plate with the relative rotation of the pressure plate and a rotated motor case is provided, where the operation of the frictional engagement part is controlled by the thrust force of the pressure plate.

JP 2012 041943 A discloses a clutch unit with a lever side clutch part and a brake side clutch part for transmitting an input torque from the lever side clutch part to the output side, the clutch unit comprising a plurality of pairs of cylindrical rollers to control the transmission of the input torque and a cutoff of the reverse input torque, where projection parts are arranged between respective pairs of cylindrical rollers and apply repulsive force to the pairs of cylindrical rollers. Another example of clutch unit comprising recess-projection fitting part that can be meshed in the rotational direction between the input member and the output member can be found in CN 105 864 315 A.

### SUMMARY OF INVENTION

### TECHNICAL PROBLEMS

In the conventional clutch unit disclosed in Patent Literature 1, when the rotational torque is reversely input to the output shaft by sitting on the seat, the cylindrical rollers are engaged with the wedge gap between the output shaft and the outer ring, and the output shaft is locked to the outer ring.

In this way, the rotational torque reversely input from the output shaft is locked at the brake-side clutch part, and recirculation of the rotational torque to the lever-side clutch part is blocked. Thereby, a seat surface height of the seat is maintained.

Here, with the clutch unit incorporated in the automobile seat lifter unit, when vertical vibrations occur during running of a vehicle on a rough road in a state of the seat being seated, the rotational torque in the forward direction and the rotational torque in the reverse direction are reversely input to the output shaft in an alternately continuous state.

At this time, in the brake-side clutch part, a contact position of each cylindrical roller with the wedge gap between the output shaft and the outer ring is slightly shifted, and hysteresis of elastic deformation exists on the output shaft, the outer ring, and the cylindrical rollers to which the rotational torque is applied, which may cause the output shaft to gradually rotate. As a result, a phenomenon may occur in which the seat is slightly lowered.

Therefore, the present invention has been proposed in view of the above-described problem, and an object of the present invention is to provide a clutch unit having a structure that can lock the output shaft even when the rotational torque in the forward and reverse directions is reversely input to the output shaft in the alternately continuous state.

### SOLUTION TO PROBLEMS

The clutch unit of the present invention comprising all the features according to claim 1 includes a basic configuration constituted of an input-side clutch part that controls transmission and blocking of a rotational torque to be input, and an output-side clutch part that transmits the rotational torque from the input-side clutch part to the output side and blocks the rotational torque reversely input from the output side.

The output-side clutch part of the present invention includes an input member, an output member that is arranged coaxially with the input member, a stationary member that rotatably supports the input member and the output member, and a clutch member that is arranged between the input member and the output member so as to be axially movable.

As technical means for achieving the above-mentioned object, in the present invention, a recess-projection fitting part that can be meshed in a rotation direction is provided between the stationary member and the clutch member, and the recess-projection fitting part is constituted of a teeth part that is formed on an axial end surface of the stationary member, and a teeth part that is formed on an axial end surface of the clutch member opposing to the axial end surface of the stationary member.

In the present invention, by providing the recess-projection fitting part between the clutch member and the stationary member, when the output member is locked, it is possible of block the rotational torque reversely input from the output member by meshing of the recess-projection fitting part in the rotation direction due to the axial movement of the clutch member.

By this meshing of the recess-projection fitting part, even when the rotational torque in the forward direction and the rotational torque in the reverse direction are reversely input to the output member in the alternately continuously state, the output member can be securely locked by fitting force in the rotation direction at the recess-projection fitting part.

Further, the recess-projection fitting part of the present invention is constituted of the teeth part formed on the axial end surface of the stationary member, and the teeth part formed on the axial end surface of the clutch member opposing to the axial end surface of the stationary member. Therefore, an axial movement distance of the clutch member can be necessarily minimized without being affected by axial dimensions of the stationary member and the clutch member.

It is desirable that the teeth part of the stationary member and the teeth part of the clutch member according to the present invention are structured so as to have a tooth tip dimension smaller than a tooth root dimension.

If the above structure is adopted, when the output member is locked, the meshing between the teeth part of the stationary member and the teeth part of the clutch member is facilitated in the recess-projection fitting part.

The clutch unit according to the present invention preferably has a structure in which the input-side clutch part and the output-side clutch part are incorporated in the automobile seat lifter unit.

If the above structure is adopted, in the automobile seat lifter unit, in a state of the seat being seated, even when the rotational torque in the forward and reverse directions is reversely input continuously to the output member, the output member can be securely locked, and the seat surface height of the seat can be securely maintained.

### ADVANTAGEOUS EFFECTS OF INVENTION

According to the present invention, by providing the recess-projection fitting part between the clutch member and the stationary member, when the output member is locked, even when the rotational torque in the forward and reverse directions is reversely input to the output member in the alternately continuous state, the output member can be securely locked by the meshing of the recess-projection fitting part.

Further, by constituting the recess-projection fitting part with the teeth part formed on the axial end surface of the stationary member and the teeth part formed on the axial end surface of the clutch member, the axial movement distance of the clutch member can be necessarily minimized without being affected by the axial dimensions of the stationary member and the clutch member. As a result, the output-side clutch part can be easily reduced in size.

### BRIEF DESCRIPTION OF DRAWINGS

FIG. 1 is a cross-sectional view showing an overall configuration of a clutch unit in an embodiment of the present invention.
FIG. 2 is a cross-sectional view taken along a line P-P in FIG. 1.
FIG. 3 is a cross-sectional view taken along a line Q-Q in FIG. 1.
FIG. 4 is a perspective view of an input shaft as viewed from an output side.
FIG. 5 is a perspective view of an output shaft as viewed from an input side.
FIG. 6 is an exploded perspective view showing an outer ring and an output gear.
FIG. 7 is a front view of the output gear as viewed from the input side.
FIG. 8 is a front view of the outer ring as viewed from the output side.
FIG. 9 is a partially enlarged view showing an example of a teeth part of the output gear and the outer ring.
FIG. 10 is a partially enlarged view showing another example of the teeth part of the output gear and the outer ring.
FIG. 11 is a configuration diagram showing a seat and a seat lifter unit of an automobile.
FIG. 12 is a partially enlarged cross-sectional view showing a state in which a cam surface of the output gear abuts with a cam surface of the input shaft.
FIG. 13 is a partially enlarged cross-sectional view showing a state in which an upright surface of the output gear abuts with an upright surface of the input shaft.

### DESCRIPTION OF EMBODIMENT

An embodiment of a clutch unit according to the present invention is described in detail with reference to the drawings.

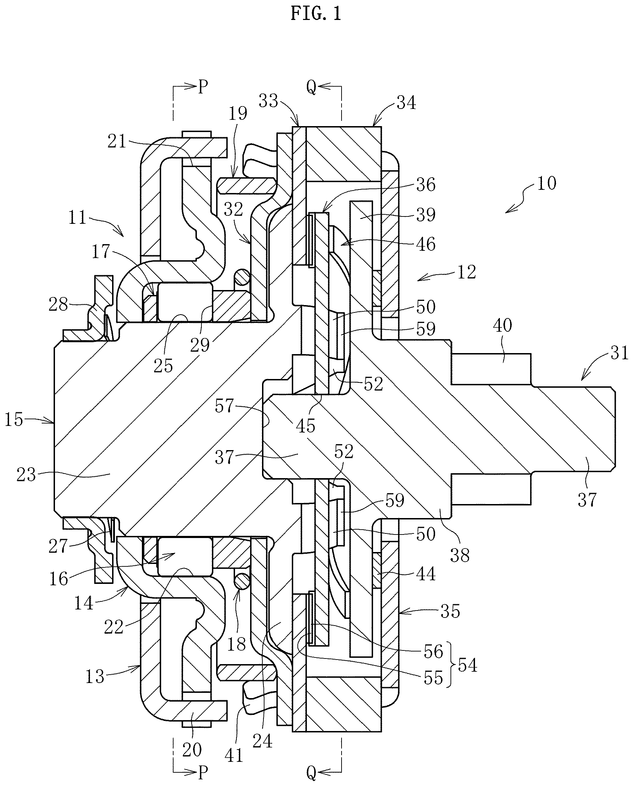

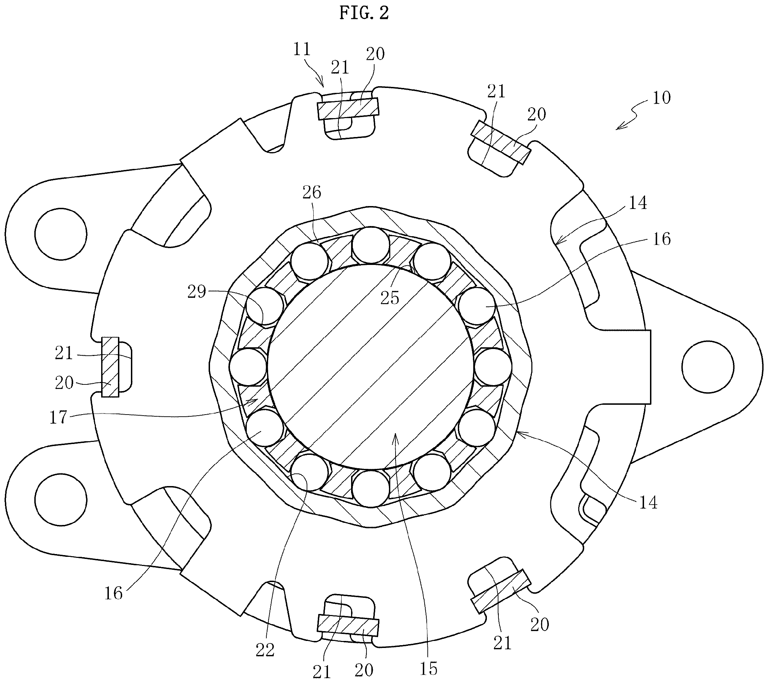

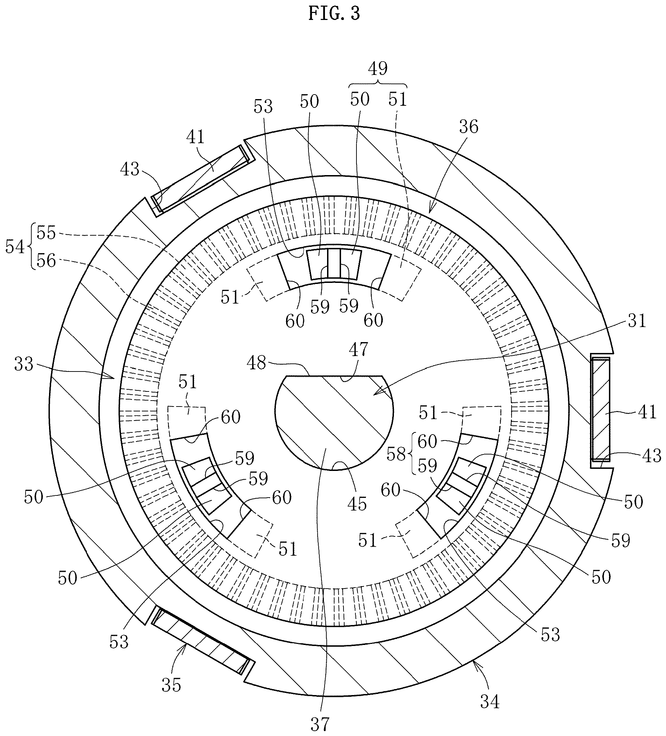

FIG. 1 is a cross-sectional view showing an overall configuration of the clutch unit, FIG. 2 is a cross-sectional view taken along a line P-P in FIG. 1, and FIG. 3 is a cross-sectional view taken along a line Q-Q in FIG. 1.

In the following embodiment, a clutch unit incorporated in an automobile seat lifter unit is described as an example. However, the present invention is also applicable to other than the automobile seat lifter unit.

As shown in FIG. 1, the clutch unit 10 of this embodiment has a structure in which a lever-side clutch part 11 as an input-side clutch part and a brake-side clutch part 12 as an output-side clutch part are unitized.

The lever-side clutch part 11 controls transmission and blocking of a rotational torque input by lever operation. The brake-side clutch part 12 has a reverse input blocking function of transmitting the rotational torque from the lever-side clutch part 11 to an output side and blocking the rotational torque reversely input from the output side.

As shown in FIGS. 1 and 2, the lever-side clutch part 11 has its main part constituted of a side plate 13, an outer ring 14 and an input shaft 15, plural cylindrical rollers 16, a cage 17, an inner centering spring 18, and an outer centering spring 19.

The side plate 13 and the outer ring 14 are integrated by fitting claw parts 20 formed on the outer peripheral edge part of the side plate 13 into notch concave parts 21 formed on the outer peripheral edge part of the outer ring 14 and caulking the same, and the rotational torque is input thereto by lever operation.

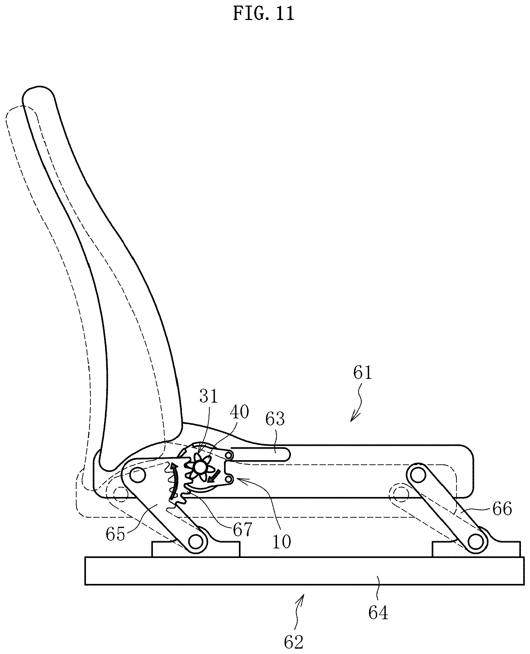

Plural cam surfaces 22 are formed on the inner periphery of the outer ring 14 at equal intervals in the circumferential direction. The rotational torque is input to the outer ring 14 using an operation lever 63 (see FIG. 11) attached to the side plate 13 by screwing or the like.

The input shaft 15 is constituted of a shaft part 23 and a flange part 24 integrally provided at an output-side end part of the shaft part 23, and transmits the rotational torque input from the outer ring 14 to the brake-side clutch part 12.

A wedge gap 26 is formed between a columnar outer peripheral surface 25 of the shaft part 23 and the cam surfaces 22 of the outer ring 14. By pressing a washer 28 into the input-side end part of the shaft part 23 with a wave washer 27 interposed therebetween, the components of the lever-side clutch part 11 are prevented from coming off.

The cylindrical rollers 16 control transmission and blocking of the rotational torque from the outer ring 14 by engagement with and disengagement from the wedge gap 26 formed between the cam surfaces 22 of the outer ring 14 and the outer peripheral surface 25 of the input shaft 15.

The cage 17 is formed with plural pockets 29 that accommodate and hold the cylindrical rollers 16 at equal intervals in the circumferential direction. With this cage 17, the cylindrical rollers 16 are held at equal intervals in the circumferential direction in the wedge gap 26 between the cam surfaces 22 of the outer ring 14 and the outer peripheral surface 25 of the input shaft 15.

The inner centering spring 18 is a C-shaped elastic member having a circular cross section and arranged between the cage 17 and a cover 32 of the brake-side clutch part 12, both ends of which are locked to a part of the cage 17 and the cover 32.

When the rotational torque is input from the outer ring 14 by lever operation, the inner centering spring 18 is forcibly expanded, with respect to the cover 32 in a stationary state, along with the rotation of the cage 17 following the outer ring 14, thereby elastic force is accumulated. When the rotational torque from the outer ring 14 is no longer input, the cage 17 returns to a neutral state by the elastic force of the inner centering spring 18.

The outer centering spring 19, which is located radially outside the inner centering spring 18, is a C-shaped strip elastic member arranged between the outer ring 14 and the above-described cover 32, both ends of which are locked to a part of the outer ring 14 and the cover 32.

When the rotational torque is input from the outer ring 14 by lever operation, the outer centering spring 19 is forcibly expanded, with respect to the cover 32 in a stationary state, along with the rotation of the outer ring 14, thereby elastic force is accumulated. When the rotational torque from the outer ring 14 is no longer input, the outer ring 14 returns to a neutral state by the elastic force of the outer centering spring 19.

As shown in FIGS. 1 and 3, the brake-side clutch part 12 has its main part constituted of the input shaft 15 of the lever-side clutch part 11, an output shaft 31 as an output member, the cover 32, an outer ring 33, a case 34 and a side plate 35 as stationary members, an output gear 36 as a clutch member, and a wave spring 46.

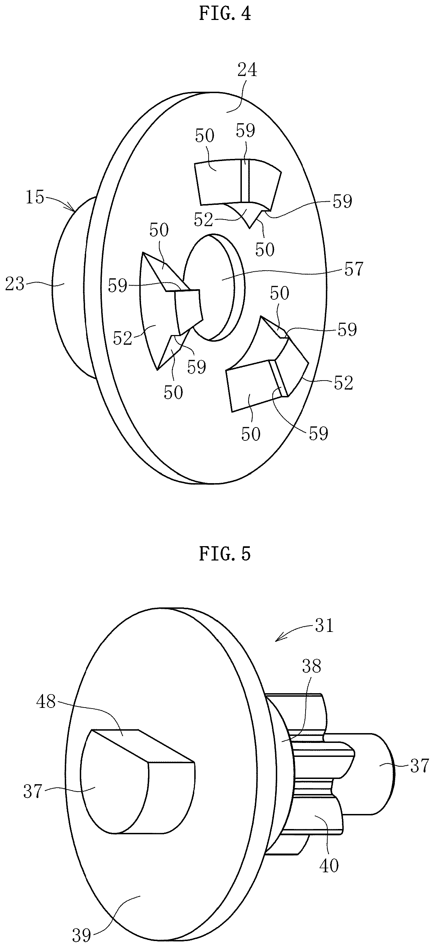

As shown in FIG. 4, the input shaft 15 is constituted of the shaft part 23 and the flange part 24 integrally formed at the output-side end part of the shaft part 23. Further, a concave part 57 into which an input shaft-side end part of a shaft part 37 of the output shaft 31 is fitted is formed at a center portion of an output-side end surface of the input shaft 15.

As shown in FIG. 5, the output shaft 31 has its main part constituted of the shaft part 37, a large-diameter part 38 formed integrally at a substantially central portion of the shaft part 37, a flange part 39 formed integrally on the input shaft side of the large-diameter part 38, and a pinion gear part 40 formed coaxially with the large-diameter part 38.

The outer ring 33 and the case 34 can be integrally formed as the stationary member as shown in FIG. 1, but in this embodiment, a configuration is made which includes the cylindrical case 34 and the outer ring 33 separate from the case 34. The cover 32 is arranged on the input side of the outer ring 33, and the side plate 35 is arranged on the output side of the case 34.

The flange part 24 of the input shaft 15, the output gear 36, the wave spring 46, and the flange part 39 of the output shaft 31 are accommodated in an internal space surrounded by the cover 32, the outer ring 33, the case 34, and the side plate 35. The input shaft 15 and the output shaft 31 are rotatably arranged with respect to the cover 32, the outer ring 33, the case 34, and the side plate 35, which are stationary members.

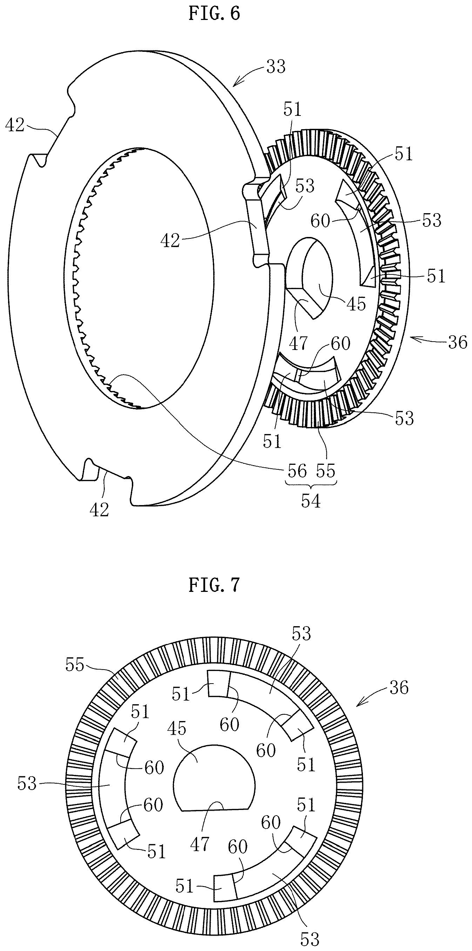

Claw parts 41 extending in the axial direction are provided at three locations on the outer peripheral edge part of the side plate 35. With respect to the claw parts 41, notch concave parts (not shown) are formed in the outer peripheral edge part of the cover 32, and notch concave parts 42 and 43 are formed in the outer peripheral edge parts of the outer ring 33 and the case 34 (see FIG. 6).

The cover 32, the outer ring 33, the case 34, and the side plate 35 are integrated as the stationary member by fitting claw parts 41 of the side plate 35 into the notch concave parts of the cover 32 and the notch concave parts 42 and 43 of the outer ring 33 and the case 34, and caulking the same.

A friction ring 44 for applying rotational resistance to the output shaft 31 is attached to the side plate 35. The friction ring 44 is brought into slidable contact with the end surface of the flange part 39 of the output shaft 31, and applies the rotational resistance to the output shaft 31 by the frictional force.

An output gear 36 is arranged between the outer ring 33 and the output shaft 31 so as to be movable in the axial direction. As shown in FIGS. 6 and 7, the output gear 36 has a shaft hole 45 at a center portion thereof, through which the shaft part 37 of the output shaft 31 is inserted. The output gear 36 is elastically pressed toward the side of the outer ring 33 by the wave spring 46 interposed between the output gear 36 and the flange part 39 of the output shaft 31 (see FIG. 1).

Note that the output gear 36 can be formed of metal material and resin material. When the metal material is adopted, a carburizing material is effective. As means for elastically pressing the output gear 36 toward the outer ring 33, other elastic members such as a disc spring and a coil spring can be used other than the above-described wave spring 46.

A flat part 47 is formed in a part of the shaft hole 45 of the output gear 36. Further, a flat part 48 is formed at the input-side end part of the shaft part 37 of the output shaft 31 (see FIG. 5). The input-side end part of the shaft part 37 of the output shaft 31 is inserted into the shaft hole 45 of the output gear 36.

At this time, by matching the phases of the flat part 48 of the output shaft 31 and the flat part 47 of the output gear 36, the output gear 36 and the output shaft 31 become non-rotatable relative to each other. On the other hand, the output gear 36 can move in the axial direction along the flat parts 47 and 48 with respect to the output shaft 31.

A cam part 49 for moving the output gear 36 in the axial direction is provided between the input shaft 15 and the output gear 36. The cam part 49 is constituted of a cam surface 50 provided on the input shaft 15 and a cam surface 51 provided on the output gear 36 (see FIGS. 4 and 6). The cam surface 50 of the input shaft 15 and the cam surface 51 of the output gear 36 can slide with respect to each other.

As shown in FIG. 4, circular arc-shaped protruding wall parts 52 are integrally formed on the end surface of the flange part 24 of the input shaft 15. The cam surface 50 is formed at the circumferential end part of the protruding wall part 52 so as to be inclined with respect to the rotation direction. The cam surfaces 50 are provided at two locations in circumferential end part of the protruding wall part 52 of the input shaft 15 in order to adapt to forward rotation and reverse rotation.

On the other hand, as shown in FIG. 7, the output gear 36 has circular arc-shaped opening parts 53 into which the protruding wall parts 52 of the input shaft 15 are inserted and arranged. The cam surface 51 is formed at the circumferential end part of the opening part 53 so as to be inclined with respect to the rotation direction. The cam surfaces 51 are also provided at two locations in the circumferential end part of the opening part 53 of the output gear 36 in order to adapt to forward rotation and reverse rotation.

In this embodiment, the protruding wall parts 52 of the input shaft 15 and the opening parts 53 of the output gear 36 are provided at three circumferential locations at equal intervals. As described above, by providing the protruding wall parts 52 and the opening parts 53 at three locations respectively, the output gear 36 can move in the axial direction in a well-balanced manner with respect to the rotation of the input shaft 15. The number of the protruding wall parts 52 and the number of the opening parts 53 may be plural other than three, or may be one.

A recess-projection fitting part 54 that can be meshed in the rotation direction is provided between the output gear 36 and the outer ring 33. As shown in FIGS. 6 to 8, the recess-projection fitting part 54 includes a teeth part 55 provided on the axial end surface of the output gear 36 and a teeth part 56 provided on the axial end surface of the outer ring 33 opposing to the axial end surface of the output gear 36.

As described above, by meshing the teeth part 56 of the outer ring 33 with the teeth part 55 of the output gear 36 in a state of being opposed in the axial direction, an axial movement distance of the output gear 36 can be suppressed to minimum necessary when the teeth part 56 of the outer ring 33 and the teeth part 55 of the output gear 36 are meshed with or unmeshed from each other, without being affected by axial dimensions (thicknesses) of the outer ring 33 and the output gear 36.

In this embodiment, the teeth part 56 of the recess-projection fitting part 54 is formed on the outer ring 33 separate from the case 34. This makes it easier to manufacture the outer ring 33 in which the teeth part 56 is engraved than in the case in which the outer ring 33 and the case 34 are integrally formed, and accordingly, the cost of the clutch unit 10 can be reduced.

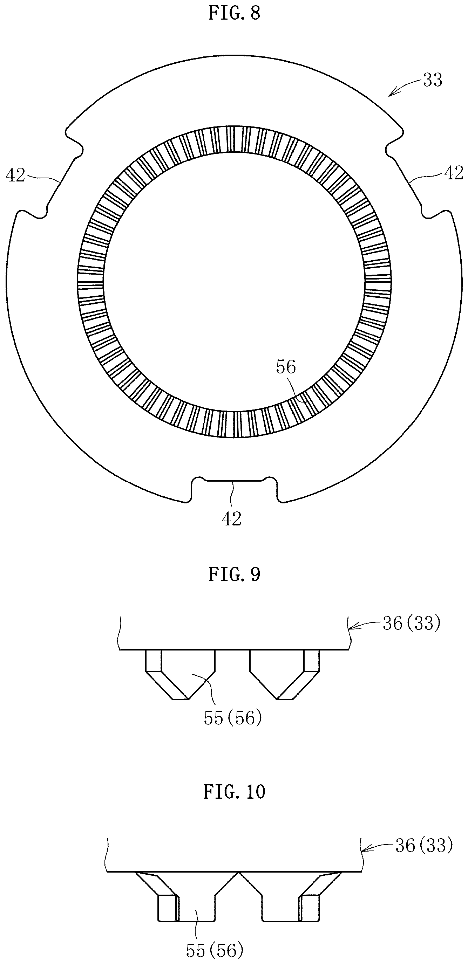

Further, in this embodiment, it is preferable that the teeth part 55 of the output gear 36 and the teeth part 56 of the outer ring 33 have their tooth tip dimensions smaller than their tooth root dimensions, for example, a triangular shape (see FIG. 9) or a trapezoidal shape (FIG. 10).

By adopting the above structure, when the output shaft 31 is locked, even when there is a shift in phase between the teeth part 55 of the output gear 36 and the teeth part 56 of the outer ring 33, the output gear 36 moves in the axial direction, and accordingly, the teeth part 55 of the output gear 36 can easily mesh with the teeth part 56 of the outer ring 33.

Between the input shaft 15 and the output gear 36, there is provided a torque transmission part 58 that transmits the rotational torque from the input shaft 15 to the output shaft 31 via the output gear 36.

As shown in FIGS. 4 and 7, the torque transmission part 58 is constituted of upright surfaces 59 formed along the axial direction at the circumferential end parts of the cam surface 50 of the protruding wall part 52 of the input shaft 15, and upright surfaces 60 formed along the axial direction at the circumferential end parts of the cam surface 51 of the opening part 53 of the output gear 36 (see FIG. 6).

The upright surfaces 59 of the input shaft 15 and the upright surfaces 60 of the output gear 36 are provided at two locations in the circumferential end parts of the protruding wall part 52 of the input shaft 15 and the opening part 53 of the output gear 36, respectively, in order to adapt to forward rotation and reverse rotation, similarly to the cam surfaces 50 and 51 described above.

The upright surface 59 of the protruding wall part 52 of the input shaft 15 abuts in the rotation direction with the upright surface 60 of the opening part 53 of the output gear 36, so that the rotational torque from the input shaft 15 can be transmitted to the output gear 36.

Because the output gear 36 and the output shaft 31 are made non-rotatable relative to each other due to the flat parts 47 and 48, the rotational torque transmitted to the output gear 36 is transmitted to the output shaft 31 via the shaft hole 45 of the output gear 36 and the shaft part 37 of the output shaft 31.

The clutch unit 10 described above is used by being incorporated into an automobile seat lifter unit 62 that adjusts a seat surface height of a seat 61 by lever operation. FIG. 11 shows the seat 61 provided in a passenger compartment of an automobile.

As shown in FIG. 11, the seat surface height of the seat 61 in the seat lifter unit 62 is adjusted by the operation lever 63 attached to the side plate 13 (see FIG. 1) of the lever-side clutch part 11. The seat lifter unit 62 has the following structure.

One ends of link members 65 and 66 are rotatably pivoted to a slide movable member 64, respectively. The other ends of the link members 65 and 66 are rotatably pivoted to the seat 61, respectively. On the other end of the link member 65, a sector gear 67 is integrally provided. The sector gear 67 meshes with the pinion gear part 40 of the output shaft 31.

In the seat lifter unit 62, for example, when the seat surface of the seat 61 is lowered, the locked state of the brake-side clutch part 12 (see FIG. 1) is released by lever operation at the lever-side clutch part 11, that is, by swinging the operation lever 63 downward.

By the unlocking at the brake-side clutch part 12, the pinion gear part 40 of the output shaft 31 of the brake-side clutch part 12 rotates clockwise (a direction of an arrow in FIG. 11) by the rotational torque transmitted from the lever-side clutch part 11 to the brake-side clutch part 12.

In the seat lifter unit 62, the sector gear 67 meshing with the pinion gear part 40 swings counterclockwise (a direction of an arrow in FIG. 11), and the link members 65 and 66 are both tilted to cause the seat surface of the seat 61 to be lowered.

When the operation lever 63 is released after the seat surface height of the seat 61 is adjusted in this manner, the operation lever 63 swings upward by the elastic force of both of the centering springs 18 and 19 and returns to its original position (neutral state).

Note that when the operation lever 63 is swung upward, the seat surface of the seat 61 is raised by operation reverse to that described above. When the operation lever 63 is released after the seat height of the seat 61 is adjusted, the operation lever 63 swings downward and returns to its original position (neutral state).

An operation example of the lever-side clutch part 11 and the brake-side clutch part 12 having the above structure is described below.

In the lever-side clutch part 11, when the rotational torque is input to the outer ring 14 by lever operation, the cylindrical rollers 16 are engaged with the wedge gap 26 between the outer ring 14 and the input shaft 15. By this engagement of the cylindrical rollers 16 with the wedge gap 26, the rotational torque is transmitted to the input shaft 15, and the input shaft 15 rotates. At this time, the elastic force is accumulated in both of the centering springs 18 and 19 as the outer ring 14 and the cage 17 rotate.

When the rotational torque is no longer input by lever operation, the cage 17 and the outer ring 14 return to the neutral state by the elastic force of both of the centering springs 18 and 19. On the other hand, the input shaft 15 maintains the given rotational position as it is. Accordingly, the input shaft 15 rotates in an inching manner by repeated rotation of the outer ring 14 due to the pumping movement of the operation lever 63.

In the brake-side clutch part 12, when the rotational torque reversely input from the output shaft 31 is blocked, the output gear 36 is pressed toward the side of the outer ring 33 by the elastic force of the wave spring 46 interposed between the output shaft 31 and the output gear 36.

In this state, the teeth part 55 of the output gear 36 is in a state of being meshed with the teeth part 56 of the outer ring 33 as the stationary member, at the recess-projection fitting part 54. The meshing between the teeth part 55 of the output gear 36 and the teeth part 56 of the outer ring 33 causes the output gear 36 to be in a locked state.

That is, the output shaft 31 that is non-rotatable relative to the output gear 36 becomes also locked. By this locked state of the output gear 36 and the output shaft 31, the rotational torque reversely input from the output shaft 31 is not transmitted to the input shaft 15. As a result, the seat surface height of the seat 61 is maintained.

Here, when vertical vibrations occur during running of a vehicle on a rough road in a state of the seat 61 being seated, even when the rotational torque in the forward direction and the rotational torque in the reverse direction are reversely input to the output shaft 31 in an alternately continuous state, the output shaft 31 can be securely locked by strong fitting force between the teeth part 55 of the output gear 36 and the teeth part 56 of the outer ring 33. As a result, the seat surface height of the seat 61 is securely maintained.

Next, when the rotational torque from the output shaft 31 is no longer reversely input and the rotational torque is input from the input shaft 15 by lever operation, the output gear 36 axially moves toward the side of the output shaft 31 by the cam part 49 between the input shaft 15 and the output gear 36.

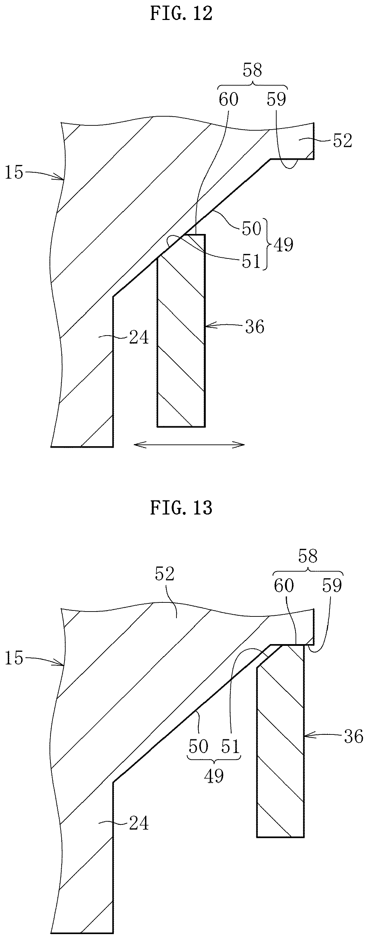

That is, in the cam part 49, as shown in FIG. 12, the cam surface 50 of the protruding wall part 52 of the input shaft 15 abuts with the cam surface 51 of the opening part 53 of the output gear 36, and the cam surface 50 of the input shaft 15 presses the cam surface 51 of the output gear 36.

When the pressing force on the output gear 36 overcomes the elastic force of the wave spring 46, the rotation of the input shaft 15 causes the cam surface 51 of the output gear 36 to be brought into slidable contact with the cam surface 50 of the input shaft 15, and accordingly, the rotation of the input shaft 15 is converted into the axial movement of the output gear 36 (see an arrow in FIG. 12).

By this axial movement of the output gear 36, the teeth part 55 of the output gear 36 is unmeshed from the teeth part 56 of the outer ring 33. When the teeth part 55 of the output gear 36 is unmeshed from the teeth part 56 of the outer ring 33, the locked state of the output gear 36 and the output shaft 31 is released.

When the output shaft 31 is unlocked, an appropriate rotational resistance is applied to the output shaft 31 by the friction ring 44. As shown in FIG. 13, the output shaft 31 is stopped due to the application of the rotational resistance to the output shaft 31. However, when the input shaft 15 is further rotated with respect to the output gear 36, in the torque transmission part 58, the upright surface 59 of the protruding wall part 52 of the input shaft 15 abuts with the upright surface 60 of the opening part 53 of the output gear 36.

When the upright surface 59 of the protruding wall part 52 of the input shaft 15 abuts with the upright surface 60 of the opening part 53 of the output gear 36, the rotational torque from the input shaft 15 is transmitted to the output gear 36 via the torque transmission part 58 formed of the upright surfaces 59 and 60. Then, because the output gear 36 and the output shaft 31 are made non-rotatable relative to each other by the flat parts 47 and 48, the rotational torque transmitted to the output gear 36 is transmitted to the output shaft 31 via the shaft hole 45 of the output gear 36 and the shaft part 37 of the output shaft 31.

As a result, the output shaft 31 rotates in the same direction as the input shaft 15. That is, when the input shaft 15 rotates in the inching manner, the output shaft 31 also rotates in the inching manner. Thereby, the seat surface height of the seat 61 can be adjusted.

As described above, when the rotational torque is input from the input shaft 15 by lever operation, the locked state of the output gear 36 and the output shaft 31 is released, and the output shaft 31 rotates. At this time, a rotation angle of the operation lever 63 in one lever operation is determined by the rotation of the input shaft 15, the unmeshing between the outer ring 33 and the output gear 36, and the rotation of the output shaft 31.

In this embodiment, the recess-projection fitting part 54 is constituted by forming the teeth part 56 on the axial end surface of the outer ring 33 and forming the teeth part 55 on the axial end surface of the output gear 36. In other words, the teeth part 56 of the outer ring 33 and the teeth part 55 of the output gear 36 can be meshed with each other in a state of being opposed to each other in the axial direction.

With this configuration, by increasing the radial dimensions of the teeth part 56 of the outer ring 33 and the teeth part 55 of the output gear 36 and by reducing the axial dimensions (tooth height) thereof, the axial movement distance of the output gear 36 can be suppressed to minimum necessary when the teeth part 56 of the outer ring 33 and the teeth part 55 of the output gear 36 are meshed with or unmeshed from each other, while the strength of the teeth part 56 of the outer ring 33 and the teeth part 55 of the output gear 36 is maintained.

As described above, by shortening the axial movement distance of the output gear 36 at the time of releasing the meshing between the outer ring 33 and the output gear 36 due to the rotation of the input shaft 15, the rotation angle of the output shaft 31 that determines the rotation angle of the operation lever 63 in one lever operation increases.

As a result, it becomes easy to manufacture the wave spring 46 having the minimum necessary spring force and stroke for moving the output gear 36 in the axial direction, without increasing the outer diameter of the wave spring 46. Therefore, the overall size of the clutch unit can be easily reduced without increasing the radial dimension of the brake-side clutch part 12.

## Claims

1. A clutch unit (10) comprising:
an input-side clutch part (11)
that controls transmission and blocking of a rotational torque to be input; and
an output-side clutch part (12) that transmits the rotational torque from the input-side clutch part (11) to an output side and blocks the rotational torque reversely input from the output side,
wherein the output-side clutch part (12) includes an input member (15), an output member (31) that is arranged coaxially with the input member (15), a stationary member (32, 33, 34, 35) that rotatably supports the input member (15) and the output member (31), and a clutch member (36) that is arranged between the input member (15) and the output member (31) so as to be axially movable, and
wherein a torque transmission part (58) that transmits the rotational torque from the input member (15) to the output member (31) via the clutch member (36) is provided between the input member and the clutch member (36), and
wherein a recess-projection fitting part (54) that can be meshed in a rotation direction is provided between the stationary member (32, 33, 34, 35) and the clutch member (36) , and includes a teeth part (56) that is formed on an axial end surface of the stationary member (33), and a teeth part (55) that is formed on an axial end surface of the clutch member (36) opposing to the axial end surface of the stationary member (33), **characterized in that**
a meshing between the teeth part (55) of the clutch member (36) and the teeth part (56) of the stationary member (33) causes the clutch member (36) to be in locked state,
wherein the teeth part (55) of the clutch member (36) is unmeshed from the teeth part (56) of the stationary member (33) by the axial movement of the clutch member (36), thereby releasing the locked state of the clutch member (36) and the output member (31).

2. The clutch unit according to claim 1, wherein the teeth part (56) of the stationary member (33) and the teeth part (55) of the clutch member (36) are shaped so as to have a tooth tip dimension smaller than a tooth root dimension.

3. The clutch unit according to claim 1 or 2, wherein the input-side clutch part and the output-side clutch part are incorporated in an automobile seat lifter unit.

## Patentansprüche

1. Kupplungseinheit (10), umfassend:
ein eingangsseitiges Kupplungsteil (11), das eine Übertragung und Blockierung eines zuzuführenden Drehmoments steuert; und
ein ausgangsseitiges Kupplungsteil (12), das das Drehmoment von dem eingangsseitigen Kupplungsteil (11) an eine Ausgangsseite überträgt und das Drehdrehmoment, das von der Ausgangsseite umgekehrt zugeführt wird, blockiert,
wobei das ausgangsseitige Kupplungsteil (12) ein Eingangselement (15), ein Ausgangselement (31), das mit dem Eingangselement (15) koaxial angeordnet ist, ein stationäres Element (32, 33, 34, 35), das das Eingangselement (15) und das Ausgangselement (31) drehbar stützt, und ein Kupplungselement (36) einschließt, das zwischen dem Eingangselement (15) und dem Ausgangselement (31) angeordnet ist, um axial bewegbar zu sein und
wobei ein Momentübertragungsteil (58), das das Drehmoment von dem Eingangselement (15) zu dem Ausgangselement (31) über das Kupplungselement (36) überträgt, zwischen dem Eingangselement und dem Kupplungselement (36) bereitgestellt ist und
wobei ein Aussparungsvorsprungspassteil (54), das in einer Drehrichtung in Eingriff gebracht werden kann, zwischen dem stationären Element (32, 33, 34, 35) und dem Kupplungselement (36) bereitgestellt ist und ein Verzahnungsteil (56), das an einer axialen Endoberfläche des stationären Elements (33) ausgebildet ist, und ein Verzahnungsteil (55) einschließt, das an einer axialen Endoberfläche des Kupplungselements (36), die der axialen Endoberfläche des stationären Elements (33) gegenüberliegt, ausgebildet ist, **dadurch gekennzeichnet, dass**
ein Ineingriffbringen zwischen dem Verzahnungsteil (55) des Kupplungselements (36) und dem Verzahnungsteil (56) des stationären Elements (33) das Kupplungselement (36) veranlasst, in einem verriegelten Zustand zu sein,
wobei das Verzahnungsteil (55) des Kupplungselements (36) durch die axiale Bewegung des Kupplungselements (36) von dem Verzahnungsteil (56) des stationären Elements (33) außer Eingriff gebracht wird, wobei dadurch der verriegelte Zustand des Kupplungselements (36) und des Ausgangselements (31) gelöst wird.

2. Kupplungseinheit nach Anspruch 1, wobei das Verzahnungsteil (56) des stationären Elements (33) und das Verzahnungsteil (55) des Kupplungselements (36) geformt sind, um eine Zahnspitzenabmessung kleiner als eine Zahnwurzelabmessung aufzuweisen.

3. Kupplungseinheit nach Anspruch 1 oder 2, wobei das eingangsseitige Kupplungsteil und das ausgangsseitige Kupplungsteil in eine Autositzhebeinheit integriert sind.

## Revendications

1. Unité d'embrayage (10) comprenant :
une partie d'embrayage côté entrée (11) qui commande la transmission et l'interruption d'un couple de rotation à entrer ; et
une partie d'embrayage côté sortie (12) qui transmet le couple de rotation de la partie d'embrayage côté entrée (11) à un côté sortie et interrompt le couple de rotation entré en sens inverse depuis le côté sortie,
dans laquelle la partie d'embrayage côté sortie (12) comporte un élément d'entrée (15), un élément de sortie (31) qui est agencé coaxialement avec l'élément d'entrée (15), un élément fixe (32, 33, 34, 35) qui soutient de manière rotative l'élément d'entrée (15) et l'élément de sortie (31), et un élément d'embrayage (36) qui est agencé entre l'élément d'entrée (15) et l'élément de sortie (31) de manière à être mobile axialement, et
dans laquelle une partie de transmission de couple (58) qui transmet le couple de rotation de l'élément d'entrée (15) à l'élément de sortie (31) par l'intermédiaire de l'élément d'embrayage (36) est prévue entre l'élément d'entrée et l'élément d'embrayage (36), et
dans laquelle une partie d'ajustement de projection en creux (54) qui peut être engrenée dans une direction de rotation est prévue entre l'élément fixe (32, 33, 34, 35) et l'élément d'embrayage (36), et comporte une partie de dents (56) qui est formée sur une surface d'extrémité axiale de l'élément fixe (33), et une partie de dents (55) qui est formée sur une surface d'extrémité axiale de l'élément d'embrayage (36) opposée à la surface d'extrémité axiale de l'élément fixe (33), **caractérisée en ce**
**qu'**un engrènement entre la partie de dents (55) de l'élément d'embrayage (36) et la partie de dents (56) de l'élément fixe (33) amène l'élément d'embrayage (36) à être dans un état verrouillé,
dans laquelle la partie de dents (55) de l'élément d'embrayage (36) est non engrenée de la partie de dents (56) de l'élément fixe (33) par le mouvement axial de l'élément d'embrayage (36), libérant ainsi l'état verrouillé de l'élément d'embrayage (36) et de l'élément de sortie (31).

2. Unité d'embrayage selon la revendication 1, dans laquelle la partie de dents (56) de l'élément fixe (33) et la partie de dents (55) de l'élément d'embrayage (36) sont formées de manière à avoir une dimension de pointe de dent inférieure à une dimension de racine de dent.

3. Unité d'embrayage selon la revendication 1 ou 2, dans laquelle la partie d'embrayage côté entrée et la partie d'embrayage côté sortie sont incorporées dans une unité de réglage de hauteur de siège d'automobile.
